**Europäisches Patentamt**

**European Patent Office**

**Office européen des brevets**

(19)

(11) Veröffentlichungsnummer : **0 139 874**
**B1**

(12)  ## EUROPÄISCHE PATENTSCHRIFT

(45) Veröffentlichungstag der Patentschrift :
15.06.88

(51) Int. Cl.⁴ : **G 01 F 23/24**

(21) Anmeldenummer : **84108479.1**

(22) Anmeldetag : **18.07.84**

(54) Schaltungsanordnung zur elektro-thermischen Füllstandsmessung.

(30) Priorität : 18.10.83 DE 3337779

(43) Veröffentlichungstag der Anmeldung :
08.05.85 Patentblatt 85/19

(45) Bekanntmachung des Hinweises auf die Patenterteilung : 15.06.88 Patentblatt 88/24

(84) Benannte Vertragsstaaten :
DE FR GB IT SE

(56) Entgegenhaltungen :
EP-A- 0 076 766
DE-A- 2 939 355
DE-A- 2 946 585
DE-A- 3 134 912
DE-B- 2 740 289

(73) Patentinhaber : VDO Adolf Schindling AG
Gräfstrasse 103
D-6000 Frankfurt/Main (DE)

(72) Erfinder : Kühnel, Frank
Bremer Strasse 2-6
D-6236 Eschborn (DE)

(74) Vertreter : Könekamp, Herbert, Dipl.-Ing.
Sodener Strasse 9
D-6231 Schwalbach (DE)

## Beschreibung

Die Erfindung betrifft eine Schaltungsanordnung zur elektrothermischen Füllstandsmessung nach dem Oberbegriff des Anspruchs 1.

Zur elektrothermischen Füllstandsmessung wird bekanntlich ein langgestreckter Leiter mit möglichst hohen Temperaturkoeffizienten verwendet, der in einem Behälter annähernd senkrecht zur Flüssigkeitsoberfläche, deren Niveau zu messen ist, angeordnet wird. Im vorliegenden Anwendungsfall geht es insbesondere um die Füllstandsmessung in Kraftfahrzeugtanks.

Zur bekannten elektrothermischen Füllstandsmessung wird der langgestreckte Leiter, nämlich der Widerstandsfühler mit einem möglichst konstanten Strom dauernd beheizt. Der Meßwiderstandswert des Widerstandsfühlers hängt dabei von der Wärmeableitung über den sogenannten thermischen Widerstand ab, die sich wiederum nach dem Füllstand richtet. Der Meßwiderstandswert wird als Meßspannung erfaßt, die an dem Widerstandsfühler abfällt.

Generell hängt die Meßspannung aber nicht nur von dem Füllstand ab, sondern von weiteren Faktoren, welche die Genauigkeit der Messung stören : Abgesehen von Schwankungen des Widerstandskoeffizienten der einzelnen Meßfühler und des ihn heizenden Stromes, der möglichst konstant sein soll, wird die Meßgenauigkeit im wesentlichen von der Umgebungstemperatur beeinflußt, der der Meßfühler ausgesetzt ist.

Es sind verschiedene Kompensationsschaltungen bekannt, die von wenigstens einem zusätzlichen Kompensationswiderstand Gebrauch machen, um den störenden Einfluß der Umgebungstemperatur möglichst zu eliminieren.

In einer solchen bekannten Schaltungsanordnung (DE-A-31 34 912) wird der Kompensationswiderstand in die Flüssigkeit tauchend angeordnet, deren Füllstand zu messen ist. Der Kompensationswiderstand wird ebenfalls an die Konstantstromquelle angeschlossen, die den Meßwiderstand, bzw. den Meßfühler speist. In der Auswertschaltung wird das von dem Meßfühler abgeleitete Meßsignal und das an dem Kompensationswiderstand entstehende Kompensationssignal unter Differenzbildung verarbeitet. Der Strom durch den Meßwiderstand wird in Abhängigkeit von der damit gemessenen Temperatur gesteuert. Der Kompensationswiderstand und der Meßwiderstand sind in Reihe geschaltet an die gemeinsame Konstantstromquelle angeschlossen. - In dieser Schaltungsanordnung ist aber eine besondere Zuleitung zu dem Kompensationswiderstand in dem Behälter, bzw. Kraftfahrzeugtank mit einem Anschluß vorzusehen. Der Kompensationswiderstand muß hinsichtlich seines Temperaturkoeffizienten genau an den Meßwiderstand des Meßfühlers angepaßt sein.

Diese Nachteile gelten zum Teil verstärkt bei einer anderen bekannten thermoelektrischen Füllstandsmeßeinrichtung (DE-A-31 15 776), bei der ein erster Widerstandssensor vom Füllgut, ein zweiter Widerstandssensor teilweise vom Füllgut und teilweise von einem sich darüber befindlichen Freiraum und ein dritter Widerstandssensor nur von dem Freiraum umgeben ist. Diese drei Widerstandssensoren sind elektrisch in Reihe geschaltet und als Reihenschaltung an eine Versorgungsspannungsquelle angeschlossen. In Reihe zu den drei Widerstandssensoren ist ein Stromregler angeordnet. Ein Steuereingang des Stromreglers steht mit der Auswertschaltung in Verbindung. Eine Reihenschaltung von drei Vergleichswiderständen ist zu der Reihenschaltung der drei Widerstandssensoren parallel geschaltet. Mit einem Operationsverstärker wird die Spannungsdifferenz zwischen einem Verbindungspunkt zweier Widerstandssensoren und einem Verbindungspunkt zweier Vergleichswiderstände ermittelt, die den Stromregler steuern. - Bei dieser Schaltungsanordnung sind also insgesamt je drei Widerstandssensoren und drei Vergleichswiderstände aufeinander abzustimmen, und es sind wenigstens drei, wenn nicht vier Leitungen aus dem Behälter herauszuführen, in dem der Füllstand gemessen werden soll.

In einer anderen bekannten Schaltungsanordnung zur Füllstandsmessung (VDO Paper, SAE Technical Paper series 830 106 Haub et al) ist der Widerstandsfühler in Reihe zu einem Kompensationswiderstand an einen Eingang eines invertierenden Verstärkers zur Temperaturkompensation angeschlossen. Der Kompensationswiderstand soll vorzugsweise in der Nähe des Widerstandsfühlers angeordnet werden und von einem möglichst kleinen Strom durchflossen werden, um eine Aufheizung zu vermeiden. - Wenn aber der Kompensationswiderstand in dem Behälter in der Nähe des Widerstandsfühlers angeordnet wird, ergibt sich auch hier die Notwendigkeit, einen zusätzlichen Anschluß herauszuführen. Außerdem hat es sich in der Praxis als schwierig erwiesen, einen Kompensationswiderstand mit gleichem Temperaturkoeffizienten wie den Meßfühler zu finden.

Aus der DE-A-29 46 585 ist ferner eine Einrichtung zum elektrischen Überwachen des Niveaus einer in einem Behälter enthaltenen Flüssigkeit bekannt, die mit einem einzigen Widerstandfühler im Bereich zwischen dem minimalen und dem maximalen Füllstand eine temperaturkompensierte Füllstandsanzeige ermöglicht. Dazu wird unverzüglich nach dem Inbetriebsetzen der Einrichtung eine von der Umgebungstemperatur abhängige Kompensationsspannung und nach Verstreichen einer vorgegebenen Zeit die Meßspannung erfaßt und danach aus der Kompensationsspannung und der Meßspannung mit einem Berechnungsverfahren der Füllstand ermittelt. Nach dieser rechnerischen Ermittlung des Füllstandes erfolgt keine weitere Messung der Spannung an dem Widerstandsfühler und keine weitere Berechnung des Füllstandes mehr. Der Oberbegriff des Anspruchs 1 geht von diesem Stand der Technik aus.

Bei einer weiteren, aus der DE-A-27 40 289 bekannten, Vorrichtung zur Überwachung des Niveaus einer in einem Behälter enthaltenen Flüssigkeit erfolgt ebenfalls nur ein einmaliger Meßvorgang an der im Bereich der Pegelschwankungen im Behälter angeordneten einzigen Widerstandssonde, deren Widerstandswert zu einem Anfangszeitpunkt der Beheizung durch eine Konstantstromquelle und nach Einstellung eines Gleichgewichtszustandes gemessen und durch Differenzbildung von Meßspannung und Kompensationsspannung ein Vergleichswert gebildet wird, der zu einem vorgegebenen Schwellwert in Beziehung gesetzt zur Flüssigkeitsniveau-Überwachung dient.

Die beiden letztgenannten Einrichtungen weisen gemeinsam den Nachteil auf, daß mit größer werdendem Zeitraum zwischen der Erfassung der Kompensationsspannung und der Erfassung der Meßspannung der Meßfehler zunimmt.

Der vorliegenden Erfindung liegt daher die Aufgabe zugrunde, ausgehend von einer Schaltungsanordnung zur elektrothermischen Füllstandsmessung der eingangs genannten Gattung diese Schaltung so weiterzubilden, daß Schwierigkeiten bei der Anpassung, bzw. Auswahl von Widerstandsfühler und Kompensationswiderstand vermindert bzw. vermieden werden. Ferner sollen Fehler bei der Ermittlung des Meßwertes vermieden und wiederholte Messungen ermöglicht werden um Niveauveränderungen zu erfassen. Dabei wird eine möglichst einfache Leitungsführung insbesondere im Behälterbereich gewünscht, d. h. die Zahl der erforderlichen Zuleitungen soll möglichst gering sein.

Diese Aufgabe wird durch die in Anspruch 1 angegebenen Maßnahmen gelöst.

Das Wesen der beanspruchten Erfindung besteht darin, daß hier nicht der Meßwiderstandswert in einem quasi stationären Zustand des Widerstandsfühlers ermittelt wird, bei dem sich der mit einem dauernden Konstantstrom beheizte Widerstandsfühler auf eine Temperatur nahe der in Abhängigkeit von dem Füllstand und der Umgebungstemperatur erreichbaren Endtemperatur eingestellt hat. Vielmehr wird hier der Meßwiderstandswert zu einem vorbestimmten Zeitpunkt jeweils nach Einschalten des Konstantstroms erfaßt, mit einem Kompensationswiderstandswert verglichen, welchen der Widerstandsfühler zu Beginn des Einschaltens des Konstantstroms jeweils aufwies, und durch Quotientenbildung ein für die Füllstandshöhe repräsentativer Wert errechnet. Diese Vorgänge werden während Abtastperioden wiederholt, um Niveauveränderungen zu erfassen.

Voraussetzung bei diesem Verfahren ist, daß das Tastverhältnis, bzw. die Relation der Aufheizzeit zu der anschließenden Abkühlzeit des Widerstandsfühlers klein genug ist, damit sich der Widerstandsfühler jeweils zu Beginn der Aufheizzeit genügend abgekühlt hat.

Diese Kompensationsmethode ist besonders genau, da hier die Störeinflüsse an ein und demselben Element, nämlich dem Widerstandsfühler erfaßt werden und nicht durch mindestens ein zusätzliches Kompensationselement, welches von Hause aus unterschiedliche Eigenschaften als der Widerstandsfühler hat und mehr oder weniger abweichenden Einflüssen unterworfen ist. Da ein gesondertes Kompensationselement, insbesondere ein Kompensationswiderstand, entfällt, brauchen zu diesem auch keine zusätzlichen Zuleitungen und Anschlüsse vorgesehen zu werden.

Die erfindungsgemäße Schaltungsanordnung zeichnet sich also durch hohe Genauigkeit und einen geringen Schaltungsaufwand insbesondere in dem Behälter- bzw. Tankbereich aus.

In der Auswertschaltung wird die an dem Widerstandsfühler abfallende Meßspannung, die zu einem vorgegebenen Zeitpunkt nach Beginn des Aufheizens erfaßt wird, dadurch kompensiert, daß sie durch die Kompensationsspannung dividiert wird, die zu Beginn der Abtastperiode ermittelt und zwischengespeichert wurde. Dabei fallen praktisch alle Störeinflüsse aus dem Meßergebnis heraus.

Ein zusätzlicher Vorteil besteht deswegen darin, daß auch die Anforderungen an die Konstantstromquelle geringer gehalten werden können, als bei üblichen Schaltungsanordnungen zur elektrothermischen Füllstandsmessung, da mit der erfindungsgemäßen Schaltung auch Stromschwankungen teilweise kompensiert werden.

Die Schaltungsanordnung insbesondere die Auswertschaltung kann sowohl als Analogschaltung als auch als Digitalschaltung verwirklicht werden:

Die Analogschaltung hat den Vorteil, daß die Spannungen, insbesondere die Kompensationsspannung wenig aufwendig durch Abtastschaltungen mit einem Kondensator gespeichert werden können (Sample-and-Hold Schaltungen).

Andererseits können bei digitaler Verarbeitung der Meßspannung und der Kompensationsspannung die Divisionsoperationen geeigneter durchgeführt werden. Voraussetzung ist dazu ein Analog-Digitalwandler, mit dem die Meßspannung und die Kompensationsspannung in entsprechende Digitalzahlen umgesetzt werden. Auch dabei erweist sich das erfindungsgemäße Prinzip als vorteilhaft, da der Bezugswert der Digitalisierung ohne störenden Einfluß auf das Divisionsergebnis bzw. den Quotienten schwanken kann und das heißt, es kann ein verhältnismäßig wenig aufwendiger Analog-Digitalwandler einfacher Bauart eingesetzt werden.

Der Schaltungsteil nach Anspruch 2 hat die Aufgabe, den aus Meßspannung und Kompensationsspannung gebildeten Quotienten jeweils bis zur erneuten Quotientenbildung in der nächsten Abtastperiode zu speichern. - Auch dieser Schaltungsteil kann als Digitalschaltung realisiert sein. - Die Ablaufsteuerung und die gesamte Auswertschaltung können besonders vorteilhaft in einem Mikroprozessor verwirklicht sein.

Die Erfindung wird im folgenden mit einem Beispiel einer Analogschaltung erläutert. Es zeigen :

Fig. 1 ein vereinfachtes Schaltbild der Analogschaltung und

Fig. 2 den erfindungsgemäß vorgesehenen Spannungsverlauf an dem Widerstandsfühler.

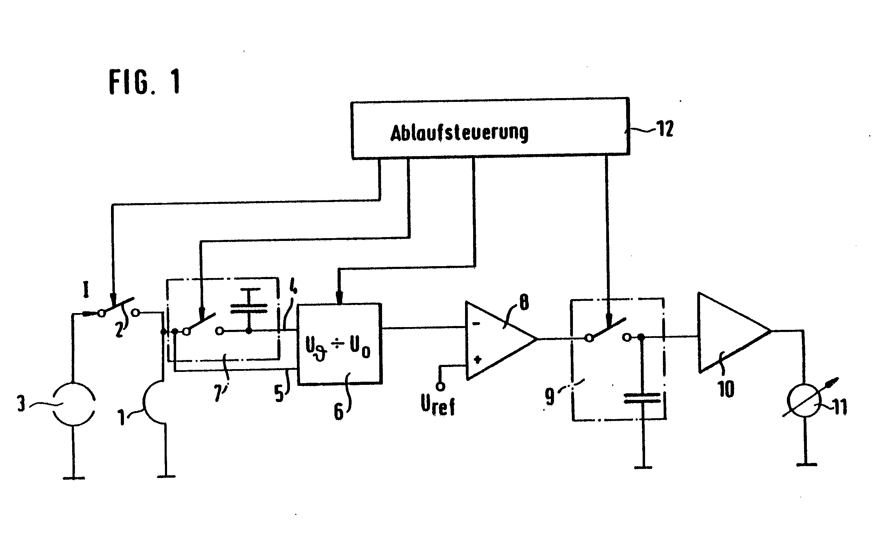

In Fig. 1 ist ein Widerstandsfühler mit 1 bezeichnet, der über einen gesteuerten Schalter 2 mit einer Konstantstromquelle 3 verbunden werden kann. Zwei Eingänge 4 und 5 eines Quotientenbilders 6 als Auswertschaltung stehen ebenfalls mit der Sonde 1 in Verbindung, und zwar der Eingang 5 direkt und der Eingang 4 über eine speichernde Abtastschaltung 7.

Ein Ausgang des Quotientenbilders ist zu einem Eingang eines Operationsverstärkers 8 geführt, dessen Zweiter Eingang mit einer Referenzspannung $U_{ref}$ beaufschlagt wird. Der Operationsverstärker ist bezüglich des Ausgangs des Quotientenbilders als Inverter geschaltet.

Ausgangsseitig steht der Operationsverstärker 8 über eine zweite speichernde Abtastschaltung 9 mit einem zweiten Verstärker 10 in Verbindung, welcher ein Anzeigeinstrument 11 beaufschlagt.

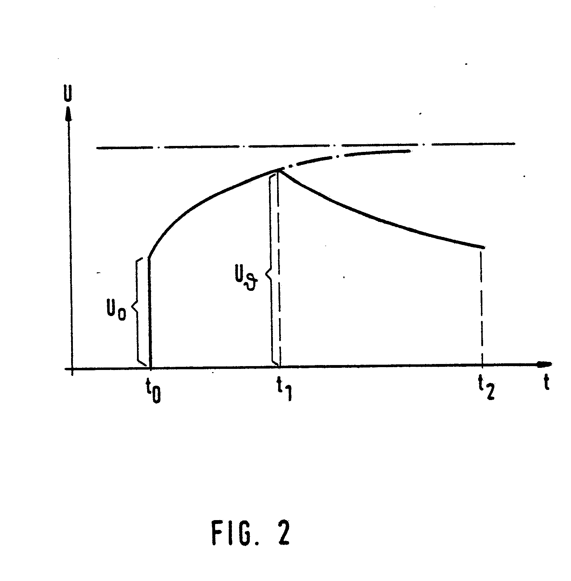

Der gesteuerte Schalter 2 und die beiden speichernden Abtastschaltungen 7 und 9 werden von einer Ablaufsteuerung 12 gesteuert. Die Steuerung ergibt sich aus der nachfolgenden Funktionsbeschreibung, zu der Fig. 2 herangezogen wird :

In Fig. 2 ist der Verlauf der Spannung an dem Widerstandsfühler 1 in Abhängigkeit von der Zeit aufgetragen.

Zu dem Zeitpunkt $t_0$ wird der Schalter 2 geschlossen und der durch den Widerstandsfühler 1 fließende Konstantstrom läßt einen sprunghaften Spannungsabfall $U_0$ entstehen. Dieser Spannungsabfall ist die Kompensationsspannung, die durch kurzzeitiges Schließen der speichernden Abtastschaltung 7 zwischengespeichert wird.

Im Verlaufe der weiteren Aufheizung des Widerstandsfühlers durch den Konstantstrom steigt der Spannungsabfall nach einer Ausgleichsfunktion entsprechend dem positiven Temperaturkoeffizienten an. Bei genügender Änderung dieses Spannungsabfalls wird diese als Meßspannung $U_\vartheta$, die an dem Eingang 5 des Quotientenbilders anliegt, erfaßt und zur Quotientenbildung mit der zwischengespeicherten Kompensationsspannung $U_0$ herangezogen : Zeitpunkt $t_1$. Anschließend wird der Schalter 2 geöffnet, so daß der Widerstandsfühler abkühlen kann, und der speichernde Abtastschalter 7 wird zurückgesetzt.

Der in dem Quotientenbilder 6 errechnete Quotient wird invertiert und von einer Referenzspannung $U_{ref}$ abgezogen, um eine dem Füllstand analoge Größe zu bilden. Diese wird nach Abschluß der Quotientenbildung bei Betätigung der zweiten speichernden Abtastschaltung 9 zwischengespeichert und nach Verstärkung bzw. Impedanzwandlung mittels des zweiten Verstärkers 10 in dem Anzeigeinstrument 11 angezeigt.

Diese Anzeige bleibt infolge der zweiten speichernden Abtastschaltung bis zum Ende der Abkühlzeit $t_2$ erhalten. Im Zeitpunkt $t_2$ wird die zweite speichernde Abtastschaltung zurückgesetzt und eine neue Abtastperiode beginnt zum Zeitpunkt $t_0$ dargestellt mit einem Schließen des Schalters 2 und der ersten speichernden Abtastschaltung zum Zwischenspeichern der jetzt auftretenden Kompensationsspannung.

Eine Abtastperiode besteht also aus der Heizzeit von $t_0$ bis $t_1$ und einer Abkühlzeit von $t_1$ bis $t_2$. Beide Zeiten müssen groß genug sein, damit sich der Widerstandsfühler zur Durchführung einer brauchbaren Messung genügend an Heizzeit aufgeheizt hat, sich andererseits aber wieder weitgehend abgekühlt haben kann, bevor eine neue Heizzeit beginnt. Daraus bestimmt sich die Abtastperiode. Es wird also mit dieser Schaltungsanordnung nicht angestrebt, daß die quasi stationäre Endtemperatur des Widerstandsfühlers wie im Falle eines dauernden Einschaltens der Konstantstromquelle erreicht wird. Durch die Division der Meßspannung durch die Kompensationsspannung fallen die störenden Einflüsse des Anfangswiderstands zu dem Zeitpunkt $t_0$ heraus, sowie weitgehend Einflüsse eines unvollkommenen Konstantstroms und von Änderungen des Temperaturkoeffizienten.

**Patentansprüche**

1. Schaltungsanordnung zur elektrothermischen Füllstandsmessung mit einem durch einen Konstantstrom beheizten Widerstandsfühler (1), mit einer Ablaufsteuerung (12) zum Betrieb des Widerstandsfühlers (1) in Abtastperioden, bei denen der Widerstandsfühler (1) zu Beginn während eines ersten Zeitraums durch den Konstantstrom beheizt und während eines zweiten folgenden Zeitraums der Konstantstrom abgeschaltet wird, wobei zu Beginn des ersten Zeitraums die am Widerstandsfühler abfallende Kompensationsspannung ($U_0$) und am Ende dieses ersten Zeitraums die Meßspannung ($U_\vartheta$) erfaßt wird, und mit einer Auswerteschaltung (4-8), in der mittels Rechenoperationen aus Meßspannung ($U_\vartheta$) und Kompensationsspannung ($U_0$) der temperaturkompensierte Füllstand ermittelt wird, dadurch gekennzeichnet, daß die Ablaufsteuerung (12) zum getakteten Betrieb des Widerstandsfühlers (1) so eingerichtet ist, daß der zweite Zeitraum jeder Abtastperiode größer ist als der jeweilige erste Zeitraum, und daß die Auswerteschaltung (4-8) zur Bildung des Quotienten aus Meßspannung und Kompensationsspannung während jeder Abtastperiode eingerichtet ist.

2. Schaltungsanordnung nach Anspruch 1, dadurch gekennzeichnet, daß eine ebenfalls von der Ablaufsteuerung (12) gesteuerte speichernde Abtastschaltung (9) mit dem Ausgang der Auswertschaltung (4 - 8) in Verbindung steht.

3. Schaltungsanordnung nach Anspruch 1 oder 2, dadurch gekennzeichnet, daß die Meßspannung und die Kompensationsspannung in einen Analog-Digitalwandler einspeisbar sind, mit dessen Ausgang digitale Speicher und eine digitale Rechenschaltung zur Quotientenbildung in Verbindung stehen.

## Claims

1. Circuit configuration for thermo-electrical level measurement with a resistance sensor (1) heated by a constant current, with a sequential controller (12) for operating the resistance sensor (1) in sampling periods in which the resistance sensor (1) is heated initially during a first time period by a constant current and in which during a second subsequent time period the constant current is switched of, the compensating voltage drop ($U_0$) at the resistance sensor being measured at the start of the first time period and the measuring voltage ($U_\theta$) being measured at the end of this first time period, and with an evaluation circuit (4-8) in which the temperature-compensated level is determined by arithmetic operation from the measuring voltage ($U_\theta$) and the compensating voltage ($U_0$), characterized in that the sequential controller (12) for clocked operation of the resistance sensor (1) is set up so that the second time period of each sampling period is larger than the respective first time period, and in that the evaluation circuit (4-8) is set up for generating the ratio of the measuring voltage and the compensating voltage during each sampling period.

2. Circuit configuration according to Claim 1, characterized in that a holding sampling circuit (9) which is also controlled by the sequential controller (12) is connected to the output of the evaluation circuit (4-8).

3. Circuit configuration according to Claim 1 or 2, characterized in that the measuring voltage and the compensating voltage can be fed to an analogue-digital converter, to the output of which is connected digital storage and a digital computation circuit for ratio generation.

## Revendications

1. Circuit pour la mesure électrothermique du niveau de remplissage, comportant un détecteur à résistance (1) chauffé par un courant d'intensité constante, ainsi qu'une commande (12) de déroulement de processus pour exploiter le détecteur à résistance (1) sous forme de périodes d'échantillonnage au cours desquelles le détecteur à résistance (1) est chauffé par un courant d'intensité constante au début pendant un premier intervalle de temps, puis, pendant un second intervalle de temps qui suit, le courant d'intensité constante est mis hors circuit, étant précisé que l'on saisit, au début du premier intervalle de temps, la tension de compensation ($U_0$) qui se présente sous forme de chute de tension aux bornes du détecteur à résistance et, à la fin de ce premier intervalle de temps, la tension de mesure ($U_\theta$) ; et comportant également un circuit de traitement (4 - 8), dans lequel on établit le niveau de remplissage, compensé en température, au moyen d'opérations de calcul à partir de la tension de mesure ($U_\theta$) et de la tension de compensation ($U_0$), caractérisé en ce que la commande (12) de déroulement de processus pour l'exploitation rythmée du détecteur à résistance (1) est réalisée de façon telle que le second intervalle de temps de chaque période d'échantillonnage soit supérieur au premier intervalle de temps correspondant ; et en ce que le circuit de traitement (4 - 8) est réalisé pour former le quotient à partir de la tension de mesure et de la tension de compensation au cours de chaque période d'échantillonnage.

2. Circuit selon la revendication 1, caractérisé en ce qu'un circuit d'échantillonnage (9) à mémoire également commandé par la commande (12) de déroulement de processus, est relié à la sortie du circuit de traitement (4 - 8).

3. Circuit selon la revendication 1 ou 2, caractérisé en ce que l'on peut introduire la tension de mesure et la tension de compensation dans un transducteur analogique-numérique, à la sortie duquel sont reliés, pour former le quotient, des mémoires numériques et un circuit de calcul numérique.

# FIG. 1

Ablaufsteuerung —12

$U_\vartheta \div U_0$

$U_{ref}$

0 139 874

FIG. 2